(19) **Europäisches Patentamt European Patent Office Office européen des brevets**

(11) **EP 3 443 264 B1**

(12) **FASCICULE DE BREVET EUROPEEN**

(45) Date de publication et mention de la délivrance du brevet:
**12.02.2020 Bulletin 2020/07**

(51) Int Cl.:
*F22B 27/16* *(2006.01)*     *F22B 1/28* *(2006.01)*

(21) Numéro de dépôt: **17717785.4**

(22) Date de dépôt: **27.03.2017**

(86) Numéro de dépôt international:
**PCT/FR2017/050696**

(87) Numéro de publication internationale:
**WO 2017/178725 (19.10.2017 Gazette 2017/42)**

(54) **DISPOSITIF DE CONVERSION D'UN LIQUIDE EN VAPEUR**

VORRICHTUNG ZUR UMWANDLUNG EINER FLÜSSIGKEIT IN DAMPF

DEVICE FOR CONVERTING A LIQUID TO A VAPOUR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.04.2016 FR 1653237**

(43) Date de publication de la demande:
**20.02.2019 Bulletin 2019/08**

(73) Titulaire: **Commissariat à l'Énergie Atomique et aux Énergies Alternatives 75015 Paris (FR)**

(72) Inventeurs:
• **CHATROUX, André 38210 Tullins (FR)**
• **PLANQUE, Michel 38180 Seyssins (FR)**
• **REYTIER, Magali 38250 Villard de Lans (FR)**
• **ROUX, Guilhem 38120 Saint-Egreve (FR)**

(74) Mandataire: **Cabinet Laurent & Charras Le Contemporain 50 Chemin de la Bruyère 69574 Dardilly Cedex (FR)**

(56) Documents cités:
**WO-A1-97/33479      DE-U1-202010 010 108 FR-A- 595 069**

**Description**

**DOMAINE DE L'INVENTION**

L'invention se rapporte au domaine des générateurs de vapeur, et notamment aux générateurs de vapeur utilisés pour les convertisseurs électrochimiques à haute température (EHVT). L'invention concerne plus particulièrement un dispositif de conversion d'un liquide en vapeur utilisant comme énergie un fluide caloporteur capable de fournir un faible débit de vapeur, notamment un débit de vapeur compris notamment entre 10 g/h et 10 kg/h, et fonctionnant à pression constante, notamment à pression atmosphérique ou sous quelques dizaines de bar.

**ETAT DE LA TECHNIQUE**

Un électrolyseur de vapeur d'eau à haute température (EVHT, acronyme pour « Electrolyse de la Vapeur d'eau à Haute Température », ou HTSE - acronyme anglo-saxon pour « *High Temperature Steam Electrolysis* ») est un dispositif électrochimique de production d'hydrogène à partir de la vapeur d'eau par application d'un courant électrique à un empilement de cellules électrolytiques connectées électriquement en série, et constituées chacune de deux électrodes, à savoir une cathode et une anode, intercalant une membrane électrolytique à oxyde solide. Globalement, de la vapeur d'eau est introduite au niveau de la cathode de chaque cellule alimentée en électricité, et une réaction de réduction électrochimique de la vapeur d'eau conduit à la formation d'hydrogène sur la cathode.

De manière générale, pour un point de fonctionnement donné de l'électrolyseur, il existe un courant électrique à appliquer à ce dernier, et le débit de vapeur d'eau à introduire dans l'électrolyseur est calculé en fonction de l'intensité du courant électrique appliquée sur l'électrolyseur. L'intensité de courant pouvant généralement varier de 0 à 100% de la gamme de fonctionnement de l'électrolyseur, il est donc également nécessaire que le débit de vapeur à générer puisse également évoluer linéairement de 0 à 100% de capacité, et être composé uniquement de vapeur. En outre, un électrolyseur est un système très sensible aux inhomogénéités de courant/débit de gaz, ces inhomogénéités pouvant en effet entrainer un vieillissement prématuré de l'électrolyseur. Par exemple, si le débit de vapeur varie autour de sa valeur de consigne, on peut observer une instabilité du point de fonctionnement de l'électrolyseur, qui se traduit par des variations de la tension des cellules, cause de vieillissement prématuré.

Plus grave, de fortes variations du débit de vapeur ont pour conséquence des variations de la pression de quelques dizaines ou centaines de mbar, lesquelles peuvent être suffisantes pour endommager les joints d'étanchéité ou fissurer les cellules électrochimiques elles-mêmes. Il est donc recherché un débit de vapeur le plus homogène et régulier possible.

Il existe dans le commerce des générateurs de vapeur d'eau à débit régulé, adaptés pour générer des débits importants de vapeur d'eau, à savoir plusieurs dizaine de kg/h. De tels générateurs de vapeur sont généralement composés d'une réserve de vapeur sous pression couplée à une vanne de régulation de débit de vapeur pour générer la quantité de vapeur d'eau demandée, et ce de manière constante.

Il existe également dans le commerce des générateurs de vapeur d'eau, adaptés pour des gammes de débit plus faibles, notamment entre 10g/h à 10kg/h environ. Les vannes de régulation de débit de vapeur utilisées pour les grands débits n'étant pas adaptées pour cette gamme de débit, une solution consiste à réguler le débit d'eau liquide entrant dans le générateur, de sorte que la vapeur d'eau générée après évaporation corresponde à la quantité de vapeur souhaitée en sortie.

Suivant un mode de réalisation, ces générateurs à faible débit utilisent un tube chauffant ou un volume dont au moins la paroi inférieure est chauffée, dans lequel une quantité contrôlée d'eau est injectée et chauffée jusqu'à évaporation. On observe cependant que de tels générateurs provoquent des « bouffées » de vapeur et donc des surpressions. Comme le principe de l'évaporation de l'eau liquide est assez complexe s'il est tenu compte de la contrainte de régularité du débit de vapeur en sortie, la difficulté dans cette solution est de maîtriser la chauffe de l'eau de manière à éviter qu'une ébullition locale de l'eau pousse une partie du liquide dans une zone trop chaude et soit source d'emballement de la réaction d'ébullition. La maîtrise de ces phénomènes étant particulièrement difficile, en pratique, les évaporateurs à faible débit ne sont généralement construits que pour générer un seul débit de vapeur sèche, c'est-à-dire sans phase liquide, la puissance électrique et la surface d'évaporation ne sont étudiées que pour un seul point de fonctionnement.

Suivant un autre mode de réalisation, d'autres évaporateurs adaptés pour des gammes de débit faibles utilisent un gaz porteur, par exemple de l'azote, qui permet de faciliter l'étalement du liquide et d'évacuer la vapeur produite. Cependant, cette solution ne permet pas de produire une vapeur sèche puisqu'il est impossible de séparer la vapeur du gaz porteur.

Les documents DE 20 2010 010108 U1 et FR 595069 A divulguent des générateurs de vapeur. Par ailleurs, le document WO 97/33479 décrit un générateur de vapeur comportant une enceinte recouvrant une surface chauffante prenant la forme d'un cône. Le cône est pourvu d'une gorge de forme spiralée, de sorte à conduire un liquide par gravité autour du cône. La surface chauffante est chauffée par une résistance électrique permettant l'évaporation du liquide circulant dans la gorge. La vapeur ainsi produite est extraite de l'enceinte par une sortie de vapeur.

Cependant, un tel générateur de vapeur ne permet pas d'obtenir une production régulière de vapeur car des bouffées de vapeur sont formées dans la gorge, c'est-à-dire des surpressions de vapeur qui peuvent dépasser 100mbars. En effet, la surface chauffante est chauffée uniformément entre 300 et 350°C. Les gouttes d'eau introduites par l'entrée de liquide s'évaporent normalement après un contact avec la surface chauffante d'une durée voisine de dix secondes. Les gouttes d'eau glissent ensuite sur un lit de vapeur généré par les précédentes gouttes d'eau. Cependant, certaines gouttes d'eau plus lourdes réussissent à toucher la surface chauffante en traversant le lit de vapeur et s'évaporent instantanément en créant une surpression locale.

Le problème technique de l'invention est de proposer un générateur de vapeur capable de produire, à pression constante, un débit constant de vapeur d'un liquide pour les faibles débits de vapeur, et ne nécessitant pas l'utilisation de gaz porteur.

## EXPOSE DE L'INVENTION

L'invention propose de répondre à ce problème technique en utilisant une surface chauffante intégrant une cornière de circulation du liquide, dans laquelle un tube caloporteur est disposé. Ainsi, le liquide recouvre l'intégralité du tube caloporteur dans la partie supérieure de la surface chauffante. Il s'ensuit que l'invention permet de limiter le phénomène de glissement des gouttes d'eau sur le lit de vapeur et une évaporation continue du liquide est obtenue.

Selon un premier aspect, l'invention concerne un dispositif de conversion d'un liquide en vapeur, fonctionnant à pression constante, ledit dispositif comportant :

- une enceinte;
- une surface chauffante à pente descendante disposée dans ladite enceinte et définissant un parcours d'écoulement d'un liquide;
- une entrée de liquide connectée à une partie supérieur de ladite surface chauffante de sorte qu'un liquide introduit depuis ladite entrée de liquide s'écoule sur ladite pente de ladite surface chauffante; et
- une sortie de vapeur ménagée à travers une paroi de ladite enceinte.

L'invention se caractérise en ce que ladite surface chauffante comporte :

- un tube caloporteur configuré pour permettre la circulation d'un fluide caloporteur de sorte à chauffer ladite surface chauffante ; et
- une cornière comportant une section en forme de U avec une partie semi-circulaire disposée autour dudit tube caloporteur et une partie supérieure formant une ouverture sur ladite enceinte.

L'invention permet ainsi de réaliser l'évaporation d'un liquide introduit par l'entrée de liquide et contenu dans la cornière autour du tube caloporteur. Pour ce faire, le liquide est chauffé par le tube caloporteur, puis extrait sous forme de vapeur par l'ouverture de la cornière.

La puissance thermique linéique appliquée sur le tube caloporteur est sélectionnée en fonction de la longueur de la surface chauffante et de la puissance thermique nécessaire pour évaporer la totalité de liquide injecté au cours du temps.

En d'autres termes, la réalisation de l'invention nécessite la mise au point de trois paramètres :

- la pente de la surface chauffante de sorte à assurer un écoulement du liquide, notamment par gravité. On comprend par exemple que si le liquide est orienté vers un réservoir dans lequel il est stocké pour son évaporation par chauffage, il est difficile de contrôler précisément la quantité de vapeur produite. Grâce à l'écoulement, chaque volume de liquide injecté reçoit « individuellement » et de manière contrôlée une quantité de chaleur. Le contrôle de la quantité de vapeur produite en fonction de la quantité de liquide injecté est ainsi facilité ;
- la puissance de chauffage du liquide par un fluide caloporteur circulant dans la tube caloporteur ; et
- la longueur de la surface chauffante de sorte à obtenir une évaporation complète de chaque mole de liquide injecté avant la fin du parcours.

Un tel dispositif est ainsi capable de fournir un débit de vapeur sèche constant dans la gamme 10g/h à 10kg/h, et ceci sans utiliser ni de gaz porteur ni d'élément électromécanique, comme une vanne de débit de vapeur par exemple. L'utilisation d'une cornière métallique pour ce générateur permet de réduire le coût de la matière et le coût de la fabrication avec une mise en œuvre simple par cintrage.

Par exemple, pour un débit de vapeur compris dans la gamme 10g/h à 10kg/h, la puissance thermique maximale appliquée peut être comprise entre 8 et 12 kW et la longueur du parcours peut être comprise entre 10 et 20 mètres. En pratique, pour un débit inférieur à 300 g/h, le liquide est de préférence injecté en goutte à goutte. Par exemple, un débit de l'ordre de 10g/h correspond environ à 1 goutte de 36 μl de liquide toutes les 13 secondes.

Selon un mode de réalisation, le diamètre de ladite partie semi-circulaire de la cornière est sensiblement égal au diamètre du tube caloporteur. Ce mode de réalisation permet au liquide d'être en contact uniquement avec la partie supérieure du tube caloporteur en regard de l'ouverture de la cornière, limitant ainsi le risque de bouffées de vapeur.

Selon un mode de réalisation, la cornière est cintrée autour du tube caloporteur. Ce mode de réalisation permet de limiter l'espace entre la partie semi-circulaire de la cornière et le tube caloporteur.

Selon un mode de réalisation, la surface chauffante forme une spirale. Ce mode de réalisation permet de limiter le volume de la surface chauffante et, ainsi, de limiter le volume du dispositif de conversion d'un liquide en vapeur. En outre, l'opération de cintrage en spirale permet, d'une part, d'assurer une compacité du dispositif et, d'autre part, de maintenir le tube métallique en fond de cornière sans autre accessoire ou opération de soudage.

Selon un mode de réalisation, la surface chauffante présente une pente comprise entre 1 à 4%. Ce mode de réalisation permet d'obtenir un compromis efficace entre la vitesse d'écoulement du liquide et la vitesse d'évaporation de sorte à limiter la longueur de la surface chauffante nécessaire pour réaliser l'évaporation du liquide.

Selon un mode de réalisation, la cornière comporte au moins une rainure s'étendant sur un côté tube caloporteur. Ce mode de réalisation permet de former un canal de capillarité de sorte à aspirer le liquide introduit par l'entrée de liquide.

L'écoulement par gravité combiné à l'écoulement par capillarité permet notamment un étalement uniforme du liquide injecté en entrée en petit débit, notamment en goutte à goutte, sur une grande longueur de la surface chauffante tout au long du parcours. Il est ainsi formé un filet d'eau continu. La formation de train de gouttes sur la surface chauffante étant évitée, la génération de vapeur est donc plus régulière et le débit de vapeur en sortie est constant même pour une injection d'eau discontinue.

Cette solution permet de produire un débit régulier de vapeur à partir d'une injection non linéaire de liquide, notamment en goutte à goutte. Bien entendu, l'entrée de liquide peut également être dimensionnée pour autoriser une injection par capillarité du liquide directement dans la rainure et éviter la formation de gouttes à l'extrémité du tube d'injection d'eau liquide. Selon un mode de réalisation, l'extrémité d'un tube d'injection d'eau liquide est dans ce cas placée au contact de la rainure.

Selon un mode de réalisation, la cornière et/ou le tube caloporteur sont constitués d'un matériau neutre pour le liquide, notamment en acier inoxydable. Ce mode de réalisation est particulièrement efficace pour résister à la corrosion.

Selon un mode de réalisation, l'enceinte comporte une enveloppe externe isolante et une enveloppe interne thermo-régulée. Ce mode de réalisation permet d'éviter une condensation sur les parois internes de l'enceinte. De préférence, cette enveloppe interne est dimensionnée et qualifiée pour fonctionner jusqu'à la pression maximale définie à la conception du générateur de vapeur dans la gamme de pression atmosphérique à quelques dizaines de bar.

Suivant un mode de réalisation adapté à un débit de production de 0 à 5 kg/h à pression atmosphérique, l'enveloppe interne a un diamètre de 220 millimètres pour une hauteur de 470 millimètres en tôle d'acier de 2 millimètres d'épaisseur. La cornière et le tube caloporteur sont d'une longueur linéaire de 10 mètres, et sont cintrés suivant un diamètre de 200 millimètres et une hauteur de 400 millimètres. Le volume dans lequel la vapeur est présente est d'environ 12 litres.

Selon un mode de réalisation, le tube caloporteur est configuré pour faire circuler un fluide caloporteur dans un sens de circulation inverse du sens d'un liquide dans ladite cornière. Ce mode de réalisation permet d'obtenir un tube caloporteur dont la chaleur est plus importante dans la partie inférieure que dans la partie supérieure du dispositif. Il s'ensuit que le liquide est introduit sur un tube caloporteur dont la température est proche de 100°C, ce qui entraîne une évaporation lente. A mesure que le liquide descend dans la cornière, la température du tube caloporteur augmente et la vitesse d'évaporation également.

En outre, bien que le dispositif décrit permette de produire de la vapeur sèche, il est également possible d'introduire, si besoin, un ou plusieurs gaz pour réaliser un mélange.

Dans ce cas, un préchauffage de ces gaz est nécessaire avant leur introduction dans la vapeur. Ce préchauffage peut être obtenu par exemple par une technique simple qui consiste à enrouler la ligne de gaz en spirale au contact de l'enceinte du générateur.

Dans le cas particulier où l'énergie du fluide caloporteur n'est pas suffisante pour produire la quantité de vapeur nécessaire, il est possible d'ajouter un complément sous forme d'énergie électrique.

Cet apport peut être un complément de chauffage du fluide avant son injection dans le générateur de vapeur. Il peut ainsi être ajouté une résistance chauffante électrique sur le tube caloporteur avant l'entrée dans le générateur de vapeur, régulée à la température nécessaire pour toujours garantir que la quantité de chaleur du fluide caloporteur soit supérieure à la quantité d'énergie nécessaire à l'évaporation du liquide introduit en entrée.

Selon un mode de réalisation, le dispositif comporte deux parties :

- une partie supérieure dans laquelle le tube caloporteur est disposé dans la partie semi-circulaire de la cornière; et

- une partie inférieure dans laquelle une résistance de chauffage électrique est disposée dans la partie semi-circulaire de la cornière.

Ainsi, si le débit à évaporer est assez faible, il est évaporé uniquement dans la première zone par l'énergie apportée par le fluide caloporteur. Si le débit dépasse la capacité d'évaporation de la première zone, il arrive préchauffé sur la seconde zone et c'est l'énergie électrique qui complète l'apport nécessaire pour réaliser l'évaporation. En outre, le fluide caloporteur sort à une température très basse, et une grande partie de l'énergie thermique du fluide caloporteur a été utilisée.

Selon un second aspect, l'invention concerne un générateur de vapeur comprenant :

- un régulateur de débit de liquide apte à générer un débit constant de liquide compris entre 0 et 10 kg/h ;
- un dispositif de conversion de liquide en vapeur selon le premier mode de réalisation de l'invention dont l'entrée est couplée audit régulateur de débit de liquide ; et
- une source d'énergie apte à fournir une quantité d'énergie suffisante à la surface chauffante pour chauffer le liquide.

## BREVE DESCRIPTION DES FIGURES

L'invention sera mieux comprise à la lecture de la description qui va suivre, donnée uniquement à titre d'exemple, et réalisée en relation avec les dessins annexés dans lesquels des références identiques désignent des éléments identiques et dans lesquels :

- la figure 1 est une représentation schématique d'un dispositif de conversion d'un liquide en vapeur selon un premier mode de réalisation de l'invention ;
- les figures 2a et 2b sont des représentations schématiques d'une section de la surface chauffante du dispositif de la figure 1 avant et après cintrage ;
- la figure 3 est une représentation schématique d'un dispositif de conversion d'un liquide en vapeur selon un second mode de réalisation de l'invention ; et
- la figure 4 est une représentation schématique d'un dispositif de conversion d'un liquide en vapeur selon un troisième mode de réalisation de l'invention.

## DESCRIPTION DETAILLEE D'UN MODE DE REALISATION DE L'INVENTION

Dans la suite de la description, l'expression "sensiblement" signifie "à 10 % près".

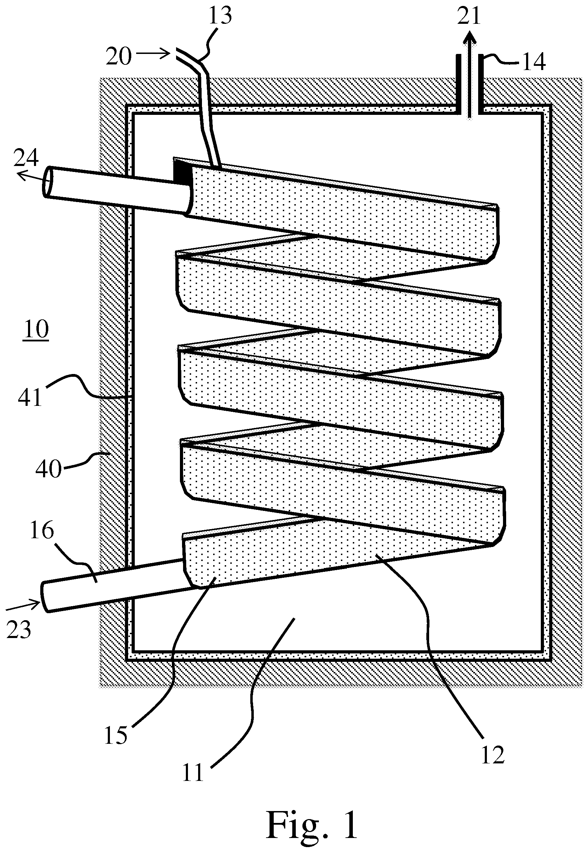

La structure d'un dispositif **10** de conversion d'un liquide **20,** notamment de l'eau, en vapeur **21** selon un mode de réalisation particulier illustré à la figure 1 est décrit ci-après.

Ce dispositif de conversion est notamment formé d'une enceinte **11** pourvue d'une sortie de vapeur **14** et d'une entrée de liquide **13** destinée à être couplée à un régulateur de débit d'eau classique (non représenté). Le régulateur de débit d'eau liquide peut être un régulateur du commerce, par exemple un régulateur de débit massique thermique ou Coriolis.

L'enceinte **11** est formée d'une enveloppe externe **40** isolante thermiquement et d'une enveloppe interne **41** qui permet de retenir la vapeur produite dans l'enceinte **11** et de la canaliser sur la sortie de vapeur **14** pour qu'elle puisse être utilisée. Cette enveloppe interne **41** est préférentiellement réalisée dans un matériau métallique. Cette enveloppe interne **41** est chauffée pour être maintenue à une température suffisante, par exemple 200 °C, de sorte à éviter l'apparition de condensat sur les parois internes de l'enceinte **11.** Cette enveloppe interne **41** a également pour fonction de résister à la pression maximale de fonctionnement du générateur de vapeur. Par exemple, pour un débit de production de 0 à 5 kg/h à pression atmosphérique, l'enveloppe interne **41** a un diamètre de 220 millimètres pour une hauteur de 470 millimètres en tôle de 2 millimètres d'épaisseur.

Le volume interne de l'enceinte **11** étant en connexion, via la sortie de vapeur **14,** avec l'extérieur, la pression interne de l'enceinte **11** est réglée par la pression extérieure. Par exemple, la sortie de vapeur **14** est connectée directement en entrée d'un électrolyseur fonctionnant à la pression atmosphérique, de sorte que la pression interne de l'enceinte **11** est égale à la pression atmosphérique, et donc sensiblement constante. Bien entendu, la pression extérieure, qui fixe la pression interne de l'enceinte **11,** peut être différente, notamment supérieure. De même, un régulateur de pression peut être prévu pour réguler directement la pression interne de l'enceinte **11** afin d'obtenir une pression sensiblement constante.

Une surface chauffante **12** ouverte de forme hélicoïdale, pour des raisons de compacité, est disposée dans cette enceinte **11.** Cette surface chauffante **12** est réalisée par une cornière **15** de section en forme de U, avec une partie semi-circulaire **17** et une partie supérieure **19** formant une ouverture **18** sur l'enceinte **11.** De préférence, cette cornière **15** est réalisée en acier inoxydable et repose sur une base support de l'enceinte **11.** Cette base support est notamment horizontale, c'est-à-dire sensiblement perpendiculaire à la direction de la gravité.

Cette surface chauffante **12** présente une pente descendante, par exemple entre 1 et 4%, qui autorise un écoulement par gravité de l'eau liquide **20** depuis l'entrée de liquide **13**.

Par ailleurs, un tube caloporteur **16** est disposé dans la partie semi-circulaire **17** de la cornière **15**. Le tube caloporteur **16** présente une section ronde adaptée à la section semi-circulaire **17** de la cornière **15** de sorte à être positionné au plus près du fond de la cornière **15**. Ce tube caloporteur **16** est, par ailleurs, destiné à chauffer le liquide **20** circulant dans la cornière **15** pour l'amener jusqu'à sa température d'évaporation. En pratique, pour transmettre efficacement l'énergie thermique au liquide à évaporer, la surface de contact entre le tube caloporteur **16** et le liquide **20** doit être grande. Suivant un mode de réalisation comprenant un tube caloporteur **16** de 10 mètres de long et de 8 millimètres de diamètre, la surface de contact est estimée à 12 dm$^2$.

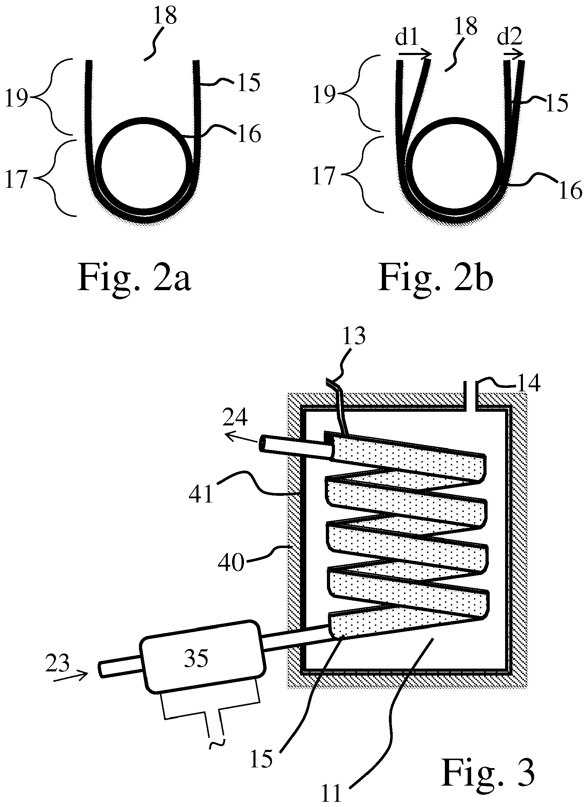

Plus précisément, comme illustré sur les figures 2a et 2b, la cornière **15** est cintrée autour du tube caloporteur **16**. Pour ce faire, le tube caloporteur **16** est inséré dans le fond de la cornière **15** tel qu'illustré sur la figure 2a. Tel qu'illustré sur la figure 2b, la partie supérieure **19** de la cornière **15** se resserre selon les directions **d1** et **d2** lors de l'opération de cintrage, de sorte que le tube caloporteur **16** soit prisonnier de la partie semi-circulaire **17** de la cornière **15**.

En variante, la partie inférieure **17** de la cornière **15** peut présenter une rainure de sorte à permettre un écoulement du liquide **20** par capillarité. L'écoulement par capillarité trouve notamment son avantage dans le cas d'un faible débit de liquide **20,** et notamment dans le cas où le liquide **20** est injecté goutte à goutte. L'écoulement par capillarité permet, en effet, un étalement uniforme du liquide **20** à évaporer sur la surface chauffante **12,** sans formation de train de gouttes, garantissant une régularité du débit de vapeur en sortie.

Par exemple, l'entrée de liquide **13** peut être un tube en acier inoxydable positionné au contact de la cornière **15** et du tube caloporteur **16,** et dimensionné pour autoriser une aspiration par capillarité du liquide **20** dans la cornière **15,** sans formation de goutte.

Bien entendu, en fonction du type d'injection du liquide **20,** en goutte à goutte ou en continue, et du débit de liquide à introduire, il est possible de réaliser le dispositif sans la rainure. Dans ce cas, le liquide **20** s'écoule uniquement par gravité.

En variante, le tube caloporteur **16** peut prendre d'autres formes sans changer l'invention.

Selon une autre variante de l'invention, illustrée sur la figure 3, le tube caloporteur **16** est chauffé par une source de chauffage **35** électrique avant de pénétrer dans l'enceinte **11**. Cette source complémentaire de chauffage **35** électrique peut prendre la forme d'une résistance entourant le tube caloporteur **16**.

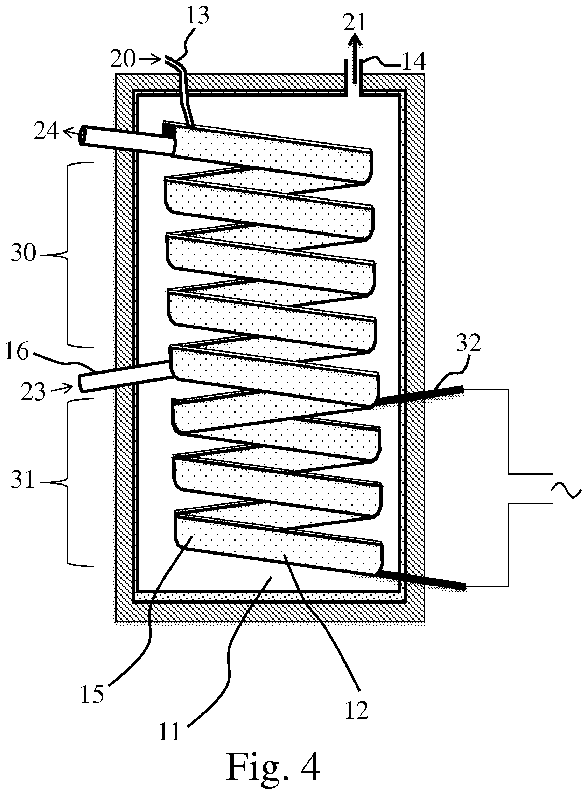

Selon une autre variante de l'invention, illustrée sur la figure 4, la surface chauffante **12** comporte deux moyens de chauffage distincts. Une partie supérieure **30** de la surface chauffante **12** est chauffée par le tube caloporteur **16** et une partie inférieure **31** de la surface chauffante **12** est chauffée par une résistance chauffante **32**. Pour ce faire, dans la partie inférieure **31,** le fond de la cornière **15** présente une rainure dans laquelle est insérée la résistance chauffante **32**. Cette rainure est ouverte et dimensionnée pour permettre l'insertion par matage de la résistance chauffante **32** et un écoulement par capillarité du liquide dans la cornière **15**. Par exemple, pour une surface chauffante de 3,5 millimètres de diamètre et une gamme de débit de 0 à 5 l/h, la cornière **15** a une hauteur de 8,5 millimètres pour une largeur de 17 millimètres, et la rainure a une hauteur et une largeur de 3,5 millimètres, permettant le matage de la résistance électrique filaire **32**.

La résistance chauffante **32** est par ailleurs couplée à une source de tension régulée pour fournir l'énergie nécessaire au chauffage de l'eau durant sa descente le long de la cornière **15** jusqu'à son évaporation.

La vapeur **21** produite est ensuite évacuée en périphérie via l'ouverture **18** de la cornière **15** sans amener de perturbation à l'écoulement pour garantir une régularité dans le fonctionnement de la chauffe.

Pour assurer une évaporation efficace de tout le liquide **20** introduit dans la cornière **15** avec ou sans ébullition, il est nécessaire de chauffer le liquide **20** de façon homogène. En pratique, la température du tube caloporteur **16** est calibrée de manière à assurer une montée, de préférence régulière, en température d'une quantité d'eau donnée dans la cornière **15** jusqu'à son évaporation totale avant la fin du parcours.

La puissance énergétique du fluide caloporteur circulant dans le tube caloporteur **16** peut être optimisée en fonction de la quantité d'eau à introduire, de manière à répartir l'eau sur toute la longueur de la cornière **15** et d'avoir une production de vapeur très stable avec une dépense énergétique minimale. Cette optimisation peut être faite en calculant l'énergie nécessaire à l'échauffement de l'eau, puis à sa vaporisation, tout en tenant compte des pertes thermiques.

En pratique, on définit un débit maximal de liquide **20** à injecter dans la cornière **15,** par exemple 10 kg/h. Ce débit maximal définit une quantité maximale de liquide **20** à évaporer, ici 10kg. On calcule la puissance thermique totale nécessaire pour vaporiser cette quantité maximale de liquide **20,** en tenant bien entendu compte de la température initiale du liquide **20** et de la pression dans laquelle le chauffage est réalisé. Par exemple, la puissance thermique totale peut être calculée pour faire passer l'eau liquide de 20°C à un état de vapeur surchauffée à 150°C à pression atmosphérique. Ce calcul est par exemple effectué selon les relations :

$$P = \dot{m}.\,Cp_1.\,(100 - 20) + \dot{m}.\,L + \dot{m}.\,Cp_2.\,(150 - 100)$$

$$P = \dot{m}.\,(Cp_1.\,(100 - 20) + L + Cp_2.\,(150 - 100))$$

$$P = \dot{m}.\,(4195.\,(100 - 20) + 2{,}258.\,10^6 + 2030.\,(150 - 100))$$

$$P = \dot{m}.\,2695100$$

$$P = 2{,}77.\,10^{-3}.\,2695100$$

$$P = 7486\ W$$

avec :

- $P$ : Puissance thermique minimale nécessaire [W] ;
- $\dot{m}$ : débit massique d'eau [2.77.10$^{-3}$ kg/s] ;
- $Cp_1$ : Chaleur spécifique moyenne de l'eau entre 20°C et 100°C [4195 J/(kg.K)] ;
- $Cp_2$ : Chaleur spécifique moyenne de la vapeur d'eau entre 100°C et 150°C [2030 J/(kg.K)] ;
- L : Chaleur latente de vaporisation de l'eau [2.258.10$^6$ J/(kg.K)].

Suivant un mode de réalisation, la puissance énergétique du fluide caloporteur circulant dans le tube caloporteur **16** sera préférentiellement choisie avec au minimum 30% de capacité de chauffage supplémentaire pour avoir une meilleure réactivité lors des changements de consigne d'évaporation. Dans le cas présenté d'un débit de production de vapeur de 10 kg/h, la puissance recommandée pour la surface chauffante **12** est de (1,3.P)=9732 W, arrondi à 10 kW.

La longueur de la surface chauffante **12** est calculée de façon à limiter la puissance thermique linéaire dans la limite de l'efficacité du transfert thermique linéique vers l'eau liquide, préférentiellement dans la gamme 0,5 à 1 kW/m. Dans le cas présenté d'un débit de production de vapeur de 10 kg/h, soit 10 kW de puissance totale, la longueur préconisée pour cette surface chauffante **12** est donc comprise entre 10 et 20 mètres.

En d'autres termes, la méthode de calcul de la puissance thermique linéique consiste notamment à :

- définir un débit maximal de liquide **20** à injecter, ce débit maximal donnant la quantité maximale de liquide à évaporer ;
- calculer la puissance thermique totale nécessaire pour vaporiser cette quantité maximale de liquide, c'est-à-dire pour élever la température de la quantité de liquide d'une température initiale à au moins sa température d'évaporation, pour réaliser l'évaporation proprement dite et pour surchauffer la vapeur produite ; et
- calculer la puissance thermique linéique à produire pour une longueur de parcours égale à la longueur maximale du parcours.

Par exemple, la puissance P de chauffage total minimale nécessaire pour vaporiser une quantité de liquide **20** peut notamment être obtenue par la somme de l'énergie $P_1$ nécessaire pour chauffer cette quantité de liquide jusqu'à sa température d'ébullition, de l'énergie $P_2$ pour réaliser la vaporisation proprement dite et de l'énergie $P_3$ pour surchauffer la vapeur produite :

$$P = P_1 + P_2 + P_3$$

En particulier, le calcul de la puissance nécessaire pour élever un débit donné de liquide d'une température initiale à une température finale, par exemple sa température d'évaporation, est par exemple donnée par la relation :

$$P_1 = \dot{m}.\,Cp_1.\,\Delta T_1$$

avec :

- $P_1$ la puissance en Watt [W] ;
- $\dot{m}$ le débit de liquide à réchauffer [kg/s] ;
- $Cp_1$ la capacité thermique massique à pression constante du liquide [J/(kg.K)] ;
- $\Delta T_1$ la différence de température entre la température finale à atteindre et la température initiale [K].

Le calcul de la puissance nécessaire pour vaporiser un débit donné de liquide est par exemple donné par la relation :

$$P_2 = \dot{m}.\,L$$

avec :

- $P_2$ la puissance en Watt [W] ;
- $\dot{m}$ le débit de liquide à réchauffer [kg/s] ;
- L la chaleur latente massique de vaporisation à pression constante du liquide [J/kg].

Le calcul de la puissance nécessaire pour surchauffer un débit donné de vapeur d'une température initiale à une température finale, par exemple jusqu'à une température supérieure de 50°C à la température d'évaporation, est par exemple donnée par la relation :

$$P_3 = \dot{m}.\,Cp_3.\,\Delta T_3$$

avec :

- $P_3$ la puissance en Watt [W] ;
- $\dot{m}$ le débit de vapeur à réchauffer [kg/s] ;
- $Cp_3$ la capacité thermique massique à pression constante de la vapeur [J/(kg.K)] ;
- $\Delta T_3$ la différence de température entre la température finale à atteindre et la température initiale [K].

Bien entendu, cette relation peut être pondérée en tenant compte d'éventuelles pertes de chaleur, préférentiellement en ajoutant une marge minimale de 30% sur la puissance totale.

Ainsi, l'eau **20** à évaporer est introduite dans la cornière **15** via l'entrée de liquide **13** et s'écoule dans la cornière **15,** par gravité et/ou par capillarité. L'eau **20** s'échauffe durant sa descente jusqu'à s'évaporer. La vapeur **21** est évacuée par l'ouverture **18** de la cornière **15** sans amener de perturbation à l'écoulement, ce qui garantit la régularité du fonctionnement.

Selon une variante, il est possible de prévoir une régulation de la puissance énergétique du fluide caloporteur circulant dans le tube caloporteur **16.** Par exemple, il est possible de coupler un capteur de température à un régulateur de tension. Le capteur de température, par exemple un thermocouple, mesure la température du fluide caloporteur circulant dans le tube caloporteur **16** au niveau de la sortie **24** du fluide caloporteur. La température du fluide caloporteur en entrée **23** du tube caloporteur **16** est alors ajustée en fonction de cette température mesurée et d'une température de consigne correspondant à la puissance thermique nécessaire pour vaporiser l'eau. En pratique, on dispose d'un tableau ou d'un diagramme donnant les correspondances entre la température, le débit d'eau, et la température du fluide caloporteur à fournir.

De préférence, le fluide caloporteur circule dans le tube caloporteur **16** dans le sens inverse de l'écoulement du liquide **20** dans la cornière **15.**

Ainsi, l'évaporateur proposé par la présente invention est adapté pour générer de faibles débits de vapeur, notamment des débits compris entre 10 g/h et 10 kg/h, et ne nécessite pas l'utilisation de gaz porteur.

En particulier, l'évaporateur proposé permet de générer de la vapeur sèche à une pression constante, et le débit de vapeur souhaitée en sortie est simplement obtenu par une régulation du débit de liquide en entrée. En particulier, il est possible de combiner l'injection de liquide par goutte à goutte et la génération d'un débit régulier de vapeur.

## Revendications

1. Dispositif de conversion (10) d'un liquide (20) en vapeur (21), fonctionnant à pression constante, ledit dispositif comportant :

- une enceinte (11) ;
- une surface chauffante (12) à pente descendante, disposée dans ladite enceinte (11), et définissant un parcours d'écoulement du liquide (20) ;
- une entrée de liquide (13) connectée à une partie supérieur de ladite surface chauffante (12) de sorte que le liquide (20) introduit depuis l'entrée de liquide (13) s'écoule sur ladite pente de la surface chauffante (12) ; et
- une sortie de vapeur (14) ménagée à travers une paroi de l'enceinte (11) ;

*caractérise* **en ce que** la surface chauffante (12) comporte :

- un tube caloporteur (16) configuré pour permettre la circulation d'un fluide caloporteur de sorte à chauffer ladite surface chauffante (12) ; et
- une cornière (15) comportant une section en forme de U avec une partie semi-circulaire (17) disposée autour dudit tube caloporteur (16) et une partie supérieure (19) formant une ouverture (18) sur l'enceinte (11).

2. Dispositif de conversion d'un liquide en vapeur selon la revendication 1, *caractérisé* **en ce qu'**un diamètre de la partie semi-circulaire (17) de la cornière (15) est sensiblement égal au diamètre du tube caloporteur (16).

3. Dispositif de conversion d'un liquide en vapeur selon la revendication 2, *caractérisé* **en ce que** la cornière (15) est cintrée autour du tube caloporteur (16).

4. Dispositif de conversion d'un liquide en vapeur selon l'une des revendications 1 à 3, *caractérisé* **en ce que** la surface chauffante (12) forme une spirale.

5. Dispositif de conversion d'un liquide en vapeur selon l'une des revendications 1 à 4, *caractérisé* **en ce que** la surface chauffante (12) présente une pente comprise entre 1 à 4%.

6. Dispositif de conversion d'un liquide en vapeur selon l'une des revendications 1 à 5, *caractérisé* **en ce que** la cornière (15) comporte au moins une rainure s'étendant sur un côté du tube caloporteur (16).

7. Dispositif de conversion d'un liquide en vapeur selon l'une des revendications 1 à 5, *caractérisé* **en ce que** la cornière (15) et/ou le tube caloporteur (16) sont constitués d'un matériau neutre pour le liquide, notamment en acier inoxydable.

8. Dispositif de conversion d'un liquide en vapeur selon l'une des revendications 1 à 7, *caractérisé* **en ce que** l'enceinte (11) comporte une enveloppe externe (40) isolante et une enveloppe interne (41) thermo-régulée.

9. Dispositif de conversion d'un liquide en vapeur selon l'une des revendications 1 à 8, *caractérisé* **en ce que** le tube caloporteur (16) est configuré pour faire circuler un fluide caloporteur dans un sens de circulation inverse au sens d'un liquide dans la cornière (15).

10. Dispositif de conversion d'un liquide en vapeur selon l'une des revendications 1 à 9, *caractérisé* **en ce qu'**il comporte deux parties :

- une partie supérieure (30) dans laquelle le tube caloporteur (16) est disposé dans la partie semi-circulaire (17) de la cornière (15) ; et
- une partie inférieure (31) dans laquelle une résistance de chauffage électrique (32) est disposée dans la partie semi-circulaire (17) de la cornière (15).

11. Générateur de vapeur comprenant :

- un régulateur de débit de liquide apte à générer un débit constant de liquide compris entre 0 et 10 kg/h ;
- un dispositif de conversion de liquide en vapeur selon l'une des revendications 1 à 10, dont l'entrée est couplée audit régulateur de débit de liquide ; et
- une source d'énergie apte à fournir une quantité d'énergie suffisante à la surface chauffante du dispositif de conversion pour chauffer le liquide.

12. Générateur de vapeur selon la revendication 11, *caractérisé* **en ce qu'**il comporte également une source de chauffage (35) du tube caloporteur (16) du dispositif de conversion, disposée au niveau d'une entrée (23) de fluide caloporteur dudit tube caloporteur (16).

**Patentansprüche**

1.  Vorrichtung zur Umwandlung (10) einer Flüssigkeit (20) in Dampf (21), die mit konstantem Druck arbeitet, wobei diese Vorrichtung enthält:

    - eine Kammer (11);
    - eine in dieser Kammer (11) angeordnete, abwärts geneigte Heizfläche (12), die einen Strömungsweg der Flüssigkeit (20) definiert;
    - einen Flüssigkeitseinlass (13), verbunden mit einem oberen Teil dieser Heizfläche (12), so dass die vom Flüssigkeitseinlass (13) aus eingeführte Flüssigkeit (20) über die genannte Neigung der Heizfläche (12) fließt; und
    - einen Dampfauslass (14), der in einer Wand der Kammer (11) ausgespart ist;

    *dadurch gekennzeichnet, dass* die Heizfläche (12) enthält:

    - ein Wärmeübertragungsrohr (16), so konfiguriert, dass es die Zirkulation einer Wärmeträgerflüssigkeit ermöglicht, um so diese Heizfläche (12) zu erwärmen; sowie
    - eine Winkelklammer (15), mit einem U-förmigen Querschnitt mit einem halbkreisförmigen Teil (17), der um dieses Wärmeübertragungsrohr (16) herum angeordnet ist und einem oberen Teil, (19) der eine Öffnung (18) zu der Kammer (11) bildet.

2.  Vorrichtung zur Umwandlung einer Flüssigkeit in Dampf nach Anspruch 1, *dadurch gekennzeichnet, dass* der Durchmesser des halbkreisförmigen Teils (17) der Winkelklammer (15) im Wesentlichen gleich dem Durchmesser des Wärmerohrs (16) ist.

3.  Vorrichtung zur Umwandlung einer Flüssigkeit in Dampf nach Anspruch 2, *dadurch gekennzeichnet, dass* die Winkelklammer (15) um das Wärmeübertragungsrohr (16) gebogen ist.

4.  Vorrichtung zur Umwandlung einer Flüssigkeit in Dampf nach einem der Ansprüche 1 bis 3, *dadurch gekennzeichnet, dass* die Heizfläche (12) eine Spirale bildet.

5.  Vorrichtung zur Umwandlung einer Flüssigkeit in Dampf, nach einem der Ansprüche 1 bis 4, *dadurch gekennzeichnet, dass* die Heizfläche (12) eine Neigung zwischen 1 und 4% aufweist.

6.  Vorrichtung zur Umwandlung einer Flüssigkeit in Dampf nach einem der Ansprüche 1 bis 5, *dadurch gekennzeichnet, dass* die Winkelklammer (15) mindestens eine Rille aufweist, die entlang einer Seite des Wärmeübertragungsrohrs (16) verläuft.

7.  Vorrichtung zur Umwandlung einer Flüssigkeit in Dampf nach einem der Ansprüche 1 bis 5, *dadurch gekennzeichnet, dass* die Winkelklammer (15) und/ oder das Wärmeübertragungsrohr (16) aus einem Material bestehen, das gegenüber der Flüssigkeit neutral ist, insbesondere aus Edelstahl.

8.  Vorrichtung zur Umwandlung einer Flüssigkeit in Dampf nach einem der Ansprüche 1 bis 7, *dadurch gekennzeichnet, dass* die Kammer (11) eine isolierende Außenhülle (40) und eine temperaturkontrollierte Innenhülle (41) enthält.

9.  Vorrichtung zur Umwandlung einer Flüssigkeit in Dampf nach einem der Ansprüche 1 bis 8, *dadurch gekennzeichnet, dass* das Wärmeübertragungsrohr (16) für die Zirkulation einer Wärmeträgerflüssigkeit in umgekehrter Richtung zur Richtung einer Flüssigkeit in der Winkelklammer (15) konfiguriert ist.

10. Vorrichtung zur Umwandlung einer Flüssigkeit in Dampf nach einem der Ansprüche 1 bis 9, *dadurch gekennzeichnet, dass* sie aus zwei Teilen besteht:

    - einem oberen Teil (30), in dem das Wärmeübertragungsrohr (16) im halbkreisförmigen Teil (17) der Winkelklammer (15) untergebracht ist; und
    - einem unteren Teil (31), in dem ein elektrischer Heizwiderstand (32) im halbkreisförmigen Teil (17) der Winkelklammer (15) untergebracht ist.

11. Dampferzeuger umfassend:

- einen Flüssigkeits- Durchflussregler, der einen konstanten Flüssigkeitsdurchfluss zwischen 0 und 10 kg/h erzeugt;
- eine Vorrichtung zur Umwandlung von Flüssigkeit in Dampf nach einem der Ansprüche 1 bis 10, deren Einlass mit diesem Flüssigkeits- Durchflussregler verbunden ist; sowie
- eine Energiequelle, die der Heizfläche der Vorrichtung eine Energiemenge liefert die ausreicht, um die Flüssigkeit zu erwärmen.

12. Dampferzeuger nach Anspruch 11, *dadurch gekennzeichnet, dass* er außerdem auch eine Heizquelle (35) des Wärmeübertragungsrohrs (16) der Vorrichtung zur Umwandlung enthält, angeordnet in Höhe eines Einlasses (23) der Wärmeträgerflüssigkeit dieses Wärmeübertragungsrohrs (16).

## Claims

1. A device (10) for converting a liquid (20) into vapor (21), operating at constant pressure, said device comprising:

- an enclosure (11);
- a heating surface (12) with a downward slope arranged in said enclosure (11) and defining a liquid flow path (20);
- a liquid inlet port (13) connected to an upper portion of said heating surface (12) so that the liquid (20) introduced from said liquid inlet (13) flows on said slope of the heating surface (12); and
- a vapor outlet port (14) formed through a wall of the enclosure (11);

*characterized* in that the heating surface (12) comprises:

- a heat transfer pipe (16) configured to allow the flowing of a heat transfer fluid to heat said heating surface (12); and
- a corner piece (15) comprising a U-shaped cross-section with a semi-circular portion (17) arranged around said heat transfer pipe (16) and an upper portion (19) forming an opening (18) on said enclosure (11).

2. The device for converting a liquid into vapor of claim 1, *characterized* in that a diameter of the semi-circular portion (17) of the corner piece (15) is substantially equal to the diameter of the heat transfer pipe (16).

3. The device for converting a liquid into vapor of claim 2, *characterized* in that the corner piece (15) is bent around the heat transfer pipe (16).

4. The device for converting a liquid into vapor of any of claims 1 to 3, *characterized* in that the heating surface (12) forms a spiral.

5. The device for converting a liquid into vapor of any of claims 1 to 4, *characterized* in that the heating surface (12) has a slope in the range from 1 to 4%.

6. The device for converting a liquid into vapor of any of claims 1 to 5, *characterized* in that the corner piece (15) comprises at least one groove extending on one side of the heat transfer pipe (16).

7. The device for converting a liquid into vapor of any of claims 1 to 5, *characterized* in that the corner piece (15) and/or the heat transfer pipe (16) are made of a material neutral for the liquid, particularly stainless steel.

8. The device for converting a liquid into vapor of any of claims 1 to 7, *characterized* in that the enclosure (11) comprises an insulating outer jacket (40) and a temperature-controlled inner jacket (41).

9. The device for converting a liquid into vapor of any of claims 1 to 8, *characterized* in that the heat transfer pipe (16) is configured to circulate a heat transfer fluid in a circulation direction inverse to the direction of a liquid in the corner piece (15).

**10.** The device for converting a liquid into vapor of any of claims 1 to 9, *characterized* **in that** it comprises two portions:

    - an upper portion (30) where the heat transfer pipe (16) is arranged in the semi-circular portion (17) of the corner piece (15); and
    - a lower portion (31) where an electric heating resistor (32) is arranged in the semi-circular portion (17) of the corner piece (15).

**11.** A water generator comprising:

    - a liquid flow regulator capable of generating a constant liquid flow rate in the range from 0 to 10 kg/hr;
    - the device for converting liquid into vapor of any of claims 1 to 10, having its inlet port coupled to said liquid flow regulator; and
    - an energy source capable of supplying a sufficient quantity of energy to the heating surface of the conversion device to heat the liquid.

**12.** The vapor generator of claim 11, *characterized* **in that** it also comprises a source (35) for heating the heat transfer pipe (16) of the conversion device, arranged at the level of an inlet port (23) of heat transfer fluid of said heat transfer pipe (16).

Fig. 1

Fig. 2a

Fig. 2b

Fig. 3

Fig. 4

**RÉFÉRENCES CITÉES DANS LA DESCRIPTION**

**Documents brevets cités dans la description**

- DE 202010010108 U1
- FR 595069 A
- WO 9733479 A